# EUROPÄISCHE PATENTANMELDUNG

(11) **EP 1 069 672 A2**
(43) Veröffentlichungstag der Anmeldung: **17.01.2001**
(21) Anmeldenummer: 00113753.8
(22) Anmeldetag: 29.06.2000
(51) Int. Cl.: H02M 1/00, H02J 7/00

(54) **Drosselwandler**

(30) Priorität: 13.07.1999 DE 19932379
(71) Anmelder: Braun GmbH, 61476 Kronberg (DE)
(72) Erfinder: Lang, Gerhard, 61276 Altweilnau (DE)

(57) **Zusammenfassung**

Die Erfindung betrifft einen selbstschwingenden Drosselwandler mit einem steuerbaren Schalter (LS), mit einer Einrichtung zur Steuerung des steuerbaren Schalters (LS), mit einer Einrichtung (R2) zur Erfassung der Ausgangsspannung des Drosselwandlers, mit einer Einrichtung (RM) zur Erfassung des Ausgangsstroms des Drosselwandlers und mit einer Einrichtung (R1) zur Erfassung der Eingangsspannung des Drosselwandlers, wobei die Steuereinrichtung den steuerbaren Schalter (LS) derart ansteuert, daß sich der Ausgangsstrom in Abhängigkeit von der Ausgangsspannung und der Eingangsspannung ändert.

## Beschreibung

Die Erfindung betrifft einen Gleichstromwandler, nämlich einen Drosselwandler mit einem steuerbaren Schalter, mit einer Einrichtung zur Steuerung des steuerbaren Schalters und mit einer Einrichtung zur Erfassung seines Ausgangsstroms.

Aus der DE 196 12 365 ist ein Drosselwandler, nämlich ein Gleichspannungs-Abwärtswandler bekannt. Der Drosselwandler schwingt mit einer von einem Oszillator vorgegebenen Schaltfrequenz. Um die Ausgangsspannung des Wandlers weitgehend unabhängig von der Belastung einzuhalten, wird die Ausgangsspannung einer Steuervorrichtung zugeführt, die einen elektronischen Schalter mit einem entsprechend eingestellten Tastverhältnis ansteuert. Um zu verhindern, daß der durch die Drossel fließende Strom einen vorbestimmten Wert überschreitet, wird zusätzlich von der Steuervorrichtung auch der während der Leitphase des elektronischen Schalters durch die Drossel fließende Strom mittels eines Meßwiderstands erfaßt und durch den elektronischen Schalter erforderlichenfalls unterbrochen. Hierdurch wird auch verhindert, daß die Ausgangsspannung einen unerwünscht hohen Wert annimmt.

Aus der DE 33 10 678 ist ebenfalls ein Gleichspannungs-Abwärtswandler bekannt, der sich von dem aus der oben genannten DE 196 12 365 bekannten Drosselwandler nur dadurch unterscheidet, daß er keinen Oszillator aufweist, der eine Schaltfrequenz vorgibt, sondern selbstschwingend aufgebaut ist: der elektronische Schalter ist solange leitend bis der durch die Drossel fließende Strom einen Grenzwert überschreitet, und sperrt solange, bis die Ausgangsspannung unter einen bestimmten Wert abgefallen ist. Aus der WO 98/24170 ist ein selbstschwingender Drosselwandler bekannt, dessen Schwingungsverhalten nur durch seine Ausgangsspannung bestimmt ist, und der zusätzlich eine Einrichtung mit einem Meßwiderstand zur Begrenzung des Drosselstroms aufweist.

Alle genannten Drosselwandler werden somit durch ihre Ausgangsspannung gesteuert. Der durch die Drossel fließende Strom ist nur dann erfaßbar, wenn der elektronische Schalter geschlossen ist, wobei die Erfassung nur zur Strombegrenzung dient.

Aus der DE 39 21 955 ist ein Schaltregler bekannt, dessen Ausgangsleistung regelbar ist. Dazu wird die Ausgangsspannung und der Ausgangsstrom erfaßt. Allerdings wird der Ausgangsstrom nur dann erfaßt, wenn der elektronische Schalter geöffnet ist.

Aus der EP 0752748 ist ein Drosselwandler zur Aufladung von Batterien bekannt. Er enthält einen elektronischen Schalter und einen Strommeßwiderstand, durch den der durch die Drossel fließende Strom gemessen und, sofern die Batteriespannung unter einem bestimmten Wert liegt, der elektronische Schalter derart ein- und ausgeschaltet wird, daß sich ein im zeitlichen Mittel konstanter Ladestrom ergibt. Ist die Batterie dann so weit aufgeladen, daß ihre Spannung über dem bestimmten Wert liegt, wird der elektronische Schalter in Abhängigkeit von der Ausgangsspannung des Drosselwandlers derart angesteuert, daß diese konstant bleibt.

Aus der WO 99/13559 ist ein selbstschwingender Drosselwandler bekannt, dessen Ausgangsstrom durch einen Strommeßwiderstand gemessen und konstant gehalten wird. Bei zunehmender Eingangsspannung erhöht sich jedoch der Ausgangsstrom entsprechend.

Es ist Aufgabe der vorliegenden Erfindung einen einfach aufgebauten Drosselwandler anzugeben, der speziell für das Laden eines Akkumulators ausgelegt ist, d.h. der unabhängig von der gerade herrschenden Eingangsspannung einen an den jeweiligen Ladezustand des Akkumulators und die herrschenden Umgebungsbedingungen (Temperatur) anpaßten Strom liefert. Ein nahezu voll aufgeladener Akkumulator kann nämlich nur noch einen kleinen Strom aufnehmen, wogegen ein fast leerer Akkumulator einen vergleichsweise großen Strom aufnehmen kann.

Die Lösung dieser Aufgabe erfolgt dadurch, daß der erfindungsgemäße Drosselwandler eine Einrichtung aufweist, die den Ausgangsstrom abhängig von der jeweiligen Ausgangs- und Eingangsspannung steuert. Da bei Verwendung des erfindungsgemäßen Drosselwandlers zur Aufladung eines Akkumulators die Ausgangsspannung des Drosselwandlers von dem angeschlossenen Akkumulator vorgegeben wird, und den jeweiligen Ladezustand des Akkus widerspiegelt, liefert auf diese Weise der Drosselwandler immer einen Strom, der an den jeweiligen Ladezustand des Akkumulators angepaßt ist.

Ein erfindungsgemäßer Drosselwandler weist einen steuerbaren Schalter, eine Einrichtung zur Steuerung des steuerbaren Schalters, eine Einrichtung zur Erfassung der Ausgangsspannung des Drosselwandlers und eine Einrichtung zur Erfassung des Ausgangsstroms des Drosselwandlers auf. Der Drosselwandler ist über seine Eingangsklemme mit beispielsweise einem Netzteil verbindbar. In an sich bekannter Weise setzt der Drosselwandler die an seiner Eingangsklemme anliegende Eingangsspannung auf eine niedrigere Ausgangsspannung herab. An seiner Ausgangsklemme soll vorzugsweise ein Akkumulator angeschlossen sein. Da sich während des Ladens des Akkumulators die Akkumulatorspannung nur sehr langsam ändert, wird die Arbeitsweise des erfindungsgemäßen Drosselwandlers zunächst für den Fall konstanter Ausgangsspannung beschrieben, die durch die Akkumulatorspannung bestimmt ist.

Der steuerbare Schalter, vorzugsweise ein elektronischer Schalter, insbesondere ein Transistor, wird von der Steuereinrichtung in an sich bekannter Weise angesteuert, d.h. nacheinander immer wieder geöffnet und geschlossen. Bei geschlossenem Schalter, also in der Leitphase des Transistors, fließt ein Strom von der Eingangsklemme über den Schalter und die Drossel in den Akkumulator, wodurch in der Drossel magnetische Energie gespeichert wird. Bei geöffnetem Schalter, also in der Sperrphase des Transistors, wird die magnetische Energie in elektrische Energie umgewandelt, sodaß ein Strom aus der Drossel in den Akkumulator fließt, wobei der Stromkreis in an sich bekannter Weise über eine Diode geschlossen ist. Die Einrichtung zur Erfassung des Ausgangsstroms des erfindungsgemäßen Drosselwandlers, vorzugsweise ein Strommeßwiderstand, erfaßt sowohl in der Leitphase als auch der Sperrphase des elektronischen Schalters den Ausgangsstrom des Drosselwandlers. Die Steuereinrichtung des erfindungsgemäßen Drosselwandlers schließt den Schalter, wenn der Ausgangsstrom bis auf einen bestimmten ersten Wert abgenommen hat, und öffnet den Schalter, wenn der Ausgangsstrom bis auf einen bestimmten zweiten Wert angestiegen ist. Da der erfindungsgemäße Drosselwandler somit durch seinen Ausgangsstrom gesteuert wird, ist dieser von der Höhe der Eingangsspannung unabhängig. Der erfindungsgemäße Drosselwandler ist aber so ausgelegt, daß sich bei zunehmender Ausgangsspannung des Drosselwandlers der erste und der zweite bestimmte Wert so ändern, daß der Schalter länger geöffnet bleibt als zuvor, sodaß der zeitlich gemittelte Ausgangsstrom des Drosselwandlers abnimmt.

Bei einer bevorzugten Ausführung ist der erfindungsgemäße Drosselwandler ferner so ausgelegt, daß sich auch bei größerer Eingangsspannung des Drosselwandlers der erste und der zweite bestimmte Wert so ändern, daß der Schalter länger geöffnet bleibt als zuvor. Auf diese Weise wird die sogenannte Speicherverzugszeit des elektronischen Schalters kompensiert, die insbesondere bei großen zu schaltenden Spannungen zu einem verzögerten Öffnen des Schalters und damit zu einem größeren Ausgangsstrom führt, als dies bei einem idealen Drosselwandler der Fall wäre. Daher kann der erfindungsgemäße Drosselwandler problemlos mit unterschiedlichen Eingangsspannungen betrieben werden, ohne daß dadurch die Größe seines Ausgangsstroms beeinflußt wird.

Der erfindungsgemäße Drosselwandler ist vorzugsweise selbstschwingend, d.h. enthält keinen Oszillator zur Steuerung des Öffnens und Schließens des steuerbaren Schalters. Der erfindungsgemäße Drosselwandler besitzt aber einen Steuereingang, über den der Drosselwandler abgeschaltet werden kann. Dies kann beispielsweise durch eine Ladesteuerungseinrichtung erfolgen, die bei Erreichen des voll geladenen Zustands eines an den Drosselwandler angeschlossenen Akkumulators ein entsprechendes Signal abgibt.

Bei einem besonders einfach aufgebauten und daher auch kostengünstigen Drosselwandler weist die Steuereinrichtung erfindungsgemäß einen ersten Komparator mit Hysterese und eine erste Referenzspannungsquelle auf. Die Hysterese des ersten Komparators wird dadurch erzeugt, daß die erste Referenzspannungsquelle zwei verschiedene Referenzspannungen liefert, je nach dem ob der Ausgang des ersten Komparators "low" oder "high" ist.

Ein vorteilhafter Drosselwandler enthält ferner eine Anordnung zur Abschaltung des Drosselwandlers bei einer Eingangsspannung, die für den ordnungsgemäßen Betrieb des Drosselwandlers zu gering ist, d.h. wenn die Spannung an den Eingangsklemmen unter eine Mindesteingangsspannung absinkt, schaltet sich der Drosselwandler selbsttätig ab.

Ein für das Laden eines Akkumulators besonders vorteilhafter Drosselwandler ist erfindungsgemäß so ausgelegt, daß bei geringer Eingangsspannung sein Ausgangswiderstand praktisch unendlich groß ist. Dies kann beispielsweise durch Öffnen mindestens eines steuerbaren Schalters erfolgen, durch den die Ausgangsklemmen von der Schaltung des Drosselwandlers abgetrennt werden, oder ein Stromfluß zwischen den Ausgangsklemmen verhindert wird. Auf diese Weise wird sichergestellt, daß sich ein an die Ausgangsklemmen des Drosselwandlers angeschlossener Akkumulator nicht über den Drosselwandler entladen kann, wenn die Eingangsklemmen des Drosselwandlers (versehentlich) kurzgeschlossen sind oder dort eine Spannung anliegt, die geringer ist als die Akkumulatorspannung.

Die Erfindung wird nachstehend anhand mehrerer Ausführungsbeispiele erläutert, die in den Zeichnungen dargestellt sind. Weitere Ausgestaltungen erfindungsgemäßer Drosselwandler sind in der Beschreibung beschrieben. Es zeigen:
- Fig. 1: ein Blockschaltbild eines erfindungsgemäßen Drosselwandlers;
- Fig. 2: ein Blockschaltbild einer bevorzugten Ausführung des erfindungsgemäßen Drosselwandlers gemäß Fig. 1;
- Fig. 3: ein Schaltbild eines erfindungsgemäßen Drosselwandlers.

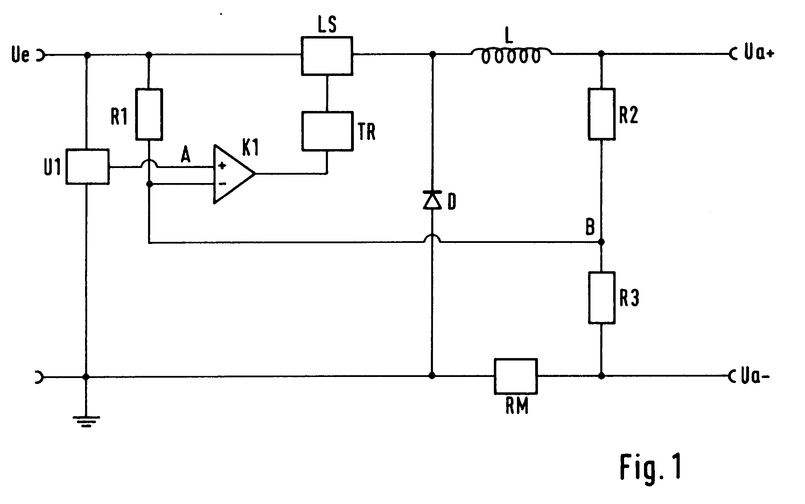

Der in Fig. 1 dargestellte erfindungsgemäße Drosselwandler enthält einen steuerbaren Schalter LS und eine Drossel L, die in an sich bekannter Weise zwischen einer Eingangsklemme Ue und einer ersten Ausgangsklemme Ua+ hintereinandergeschaltet sind. Der Verbindungspunkt zwischen dem steuerbaren Schalter LS und der Drossel L ist mit der Kathode einer Freilaufdiode D verbunden. Die Anode der Freilaufdiode D ist mit Masse und dem einen Ende eines Strommeßwiderstands RM verbunden. Das andere Ende des Strommeßwiderstands RM ist mit einer zweiten Ausgangsklemme Ua- verbunden. Ein erster Widerstand R1 ist zwischen die Eingangsklemme Ue und einen Punkt B geschaltet, der über einen zweiten Widerstand R2 mit der ersten Ausgangsklemme Ua+ und einen dritten Widerstand R3 mit der zweiten Ausgangsklemme Ua- verbunden ist. Der Punkt B ist ferner mit dem invertierenden Eingang eines ersten Komparators K1 verbunden, dessen Ausgang über einen Treiber TR mit einem Steuereingang des steuerbaren Schalters LS verbunden ist. Der nichtinvertierende Eingang des ersten Komparators K1 ist mit einer ersten Referenzspannungsquelle U1 verbunden, die zwischen die Eingangsklemme Ue und Masse geschaltet ist.

Der erste Komparator K1 und die erste Referenzspannungsquelle U1 sind so zusammengeschaltet, daß die von der ersten Referenzspannungsquelle U1 gelieferte Referenzspannung Uref1 (Punkt A) zwei verschiedene Werte annimmt, je nach dem ob der Ausgang des ersten Komparators K1 "low" oder "high" ist, d.h. der erste Komparator K1 weist Hysterese auf, weil seine Kippspannung (Punkt A) einen anderen Wert hat als seine Rückkippspannung (Punkt A). An Punkt B herrscht ein Potential, das durch die Spannungsabfälle an den Widerständen R1, R2, R3 und RM bestimmt ist und somit von der Eingangsspannung, der Ausgangsspannung und dem Ausgangsstrom abhängt. Die Eingangsspannung wird nämlich durch den ersten, dritten und den Strommeßwiderstand heruntergeteilt, die Ausgangsspannung durch den zweiten und dritten Widerstand. Der erste Komparator K1 vergleicht die Spannung an Punkt B mit der Spannung an Punkt A. Solange die Spannung an Punkt B kleiner ist als die Spannung an Punkt A, liegt der Ausgang des ersten Komparators K1 auf "high" und umgekehrt: der Ausgang des ersten Komparators K1 liegt auf "low", solange die Spannung an Punkt B größer ist als die Spannung an Punkt A.

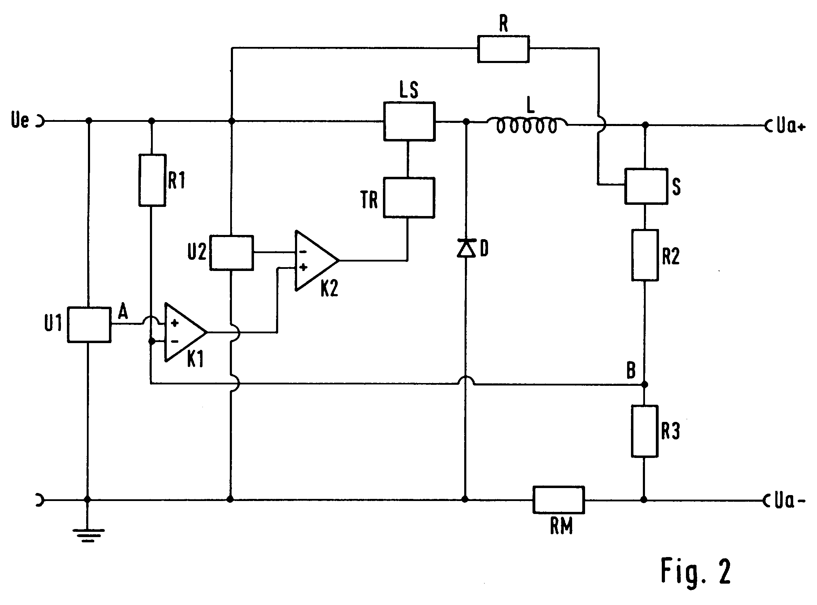

Eine bevorzugte Ausführung des erfindungsgemäßen Drosselwandlers ist in Figur 2 dargestellt. Diese Ausführung unterscheidet sich von dem erfindungsgemäßen Drosselwandlers gemäß Fig. 1 durch eine Anordnung zur Abschaltung des Drosselwandlers bei geringer Eingangsspannung und eine Anordnung zur Verhinderung der Entladung eines an den Drosselwandler angeschlossenen Akkumulators über den Drosselwandler bei geringer Eingangsspannung.

Die Anordnung zur Abschaltung des Drosselwandlers bei geringer Eingangsspannung weist eine zweite Referenzspannungsquelle U2 auf, die zwischen die Eingangsklemme Ue und Masse geschaltet ist, sowie einen zweiten Komparator K2, dessen nichtinvertierender Eingang mit dem Ausgang des ersten Komparators K1, dessen invertierender Eingang mit der zweiten Referenzspannungsquelle U2 und dessen Ausgang mit dem Treiber TR verbunden ist. Der zweite Komparator K2 vergleicht die Ausgangsspannung des ersten Komparators K1 mit einer von der zweiten Referenzspannungsquelle U2 gelieferten zweiten Referenzspannung Uref2. Bei geringer Eingangsspannung, d.h. solange die Eingangsspannung unterhalb der zweiten Referenzspannung Uref2 liegt, bleibt der Ausgang des zweiten Komparators K2 auf "low", sodaß über den Treiber TR der steuerbare Schalter LS offen gehalten wird, und der Drosselwandler nicht schwingen kann. Liegt die Eingangsspannung jedoch oberhalb der zweiten Referenzspannung URef2, so folgt die Ausgangsspannung des zweiten Komparators K2 der Ausgangsspannung des ersten Komparators K1, d.h. der steuerbare Schalter LS wird vom ersten Komparator K1 über den zweiten Komparator K2 und den Treiber TR angesteuert.

Die Anordnung zur Verhinderung der Entladung eines an den Drosselwandler angeschlossenen Akkumulators über den Drosselwandler bei geringer Eingangsspannung weist einen zweiten steuerbaren Schalter S auf, der zwischen dem zweiten Widerstand R2 und der ersten Ausgangsklemme Ua+ angeordnet ist, und dessen Steuereingang über einen zehnten Widerstand R10 mit der Eingangsklemme Ue verbunden ist. Der zweite steuerbare Schalter S besteht vorzugsweise aus einem elektronischen Schalter, beispielsweise einem Transistor, dessen Basis mit dem zehnten Widerstand R10 verbunden ist. Bei geringer Eingangsspannung ist der zweite steuerbare Schalter S geöffnet, sodaß der Ausgangswiderstand des Drosselwandlers praktisch unendlich groß ist, und sich der Akkumulator nicht über den zweiten und dritten Widerstand R2, R3 entladen kann.

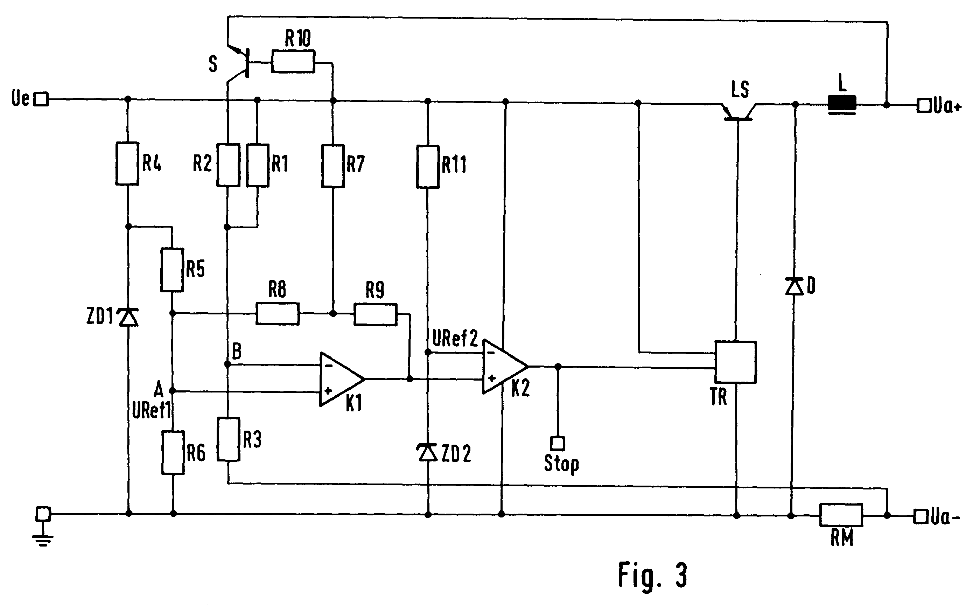

Gemäß Fig. 3 besteht die erste Referenzspannungsquelle U1 aus einem vierten, fünften und sechsten Widerstand R4, R5, R6, die hintereinander zwischen die Eingangsklemme Ue und Masse geschaltet sind, sowie einer ersten Zenerdiode ZD1, deren Anode mit Masse und dem einen Ende des sechsten Widerstands R6 verbunden ist und deren Kathode mit dem vierten und fünften Widerstand R4, R5 verbunden ist. Das andere Ende des sechsten Widerstands R6 ist mit dem nichtinvertierenden Eingang des ersten Komparators K1 (Punkt A) und dem einen Ende eines achten Widerstands R8 verbunden. Das andere Ende des achten Widerstands R8 ist über einen siebenten Widerstand R7 mit der Eingangsklemme Ue und über einen neunten Widerstand R9 mit dem Ausgang des ersten Komparators K1 verbunden. Die zweite Referenzspannungsquelle U2 besteht aus einer zweiten Zenerdiode ZD2, deren Anode mit Masse und deren Kathode mit dem invertierenden Eingang des zweiten Komparators K2 und über einen elften Widerstand R11 mit der Eingangsklemme Ue verbunden ist.

Die von der ersten Referenzspannungsquelle erzeugte Referenzspannung Uref1 (Punkt A) ist die über den fünften und sechsten Widerstand R5, R6 heruntergeteilte Zenerspannung, die aus der Eingangsspannung über den vierten Widerstand R4 und die erste Zenerdiode ZD1 erzeugt wird. Sie hat, wie oben bereits erwähnt, zwei verschiedene Werte, je nach dem ob der Ausgang des ersten Komparators "low" oder "high" ist. Liegt nämlich der Ausgang des ersten Komparators K1 auf "high", wird die Spannung an Punkt A (Kippspannung) durch die heruntergeteilte Zenerspannung und der über den sechsten, siebenten und achten Widerstand R6, R7, R8 heruntergeteilten Eingangsspannung bestimmt. Liegt dagegen der Ausgang des ersten Komparators K1 auf "low", so ist der neunte Widerstand R9 der Reihenschaltung aus dem sechsten und achten Widerstand R6, R8 parallelgeschaltet. Daher wird die Spannung an Punkt A (Rückkippspannung) durch die heruntergeteilte Zenerspannung und der einerseits über den sechsten, siebenten und achten Widerstand R6, R7, R8 und andererseits den siebenten und neunten Widerstand R7, R9 heruntergeteilten Eingangsspannung bestimmt. Die Differenz zwischen der Kipp- und der Rückkippspannung ist die Hysteresespannung. Der siebente R7 und der neunte Widerstand R9 dienen gleichzeitig als Pull-up-Widerstände für den Ausgang des ersten Komparators K1.

Solange der Ausgang des ersten Komparators K1 "low" ist, d.h. die Ausgangsspannung des ersten Komparators K1 die Referenzspannung Uref2 der zweiten Referenzspannungsquelle U2 nicht übersteigt, bleibt der Ausgang des zweiten Komparators K2 ebenfalls auf "low". Somit wird der Treiber TR nicht angesteuert, und der steuerbare Schalter LS bleibt geöffnet. Liegt dagegen der Ausgang des ersten Komparators K1 auf "high", d.h. ist die Ausgangsspannung des ersten Komparators K1 größer als die Referenzspannung Uref2 der zweiten Referenzspannungsquelle U2, liegt auch der Ausgang des zweiten Komparators K2 auf "high". Dadurch wird der Treiber TR angesteuert, sofern nicht dem Ausgang des zweiten Komparators K2 über den Steuereingang Stop ein Abschaltsignal zugeführt ist.

## Patentansprüche

1. Drosselwandler mit einem steuerbaren Schalter (LS), mit einer Einrichtung zur Steuerung des steuerbaren Schalters (LS), mit einer Einrichtung (R2) zur Erfassung der Ausgangsspannung des Drosselwandlers, mit einer Einrichtung (RM) zur Erfassung des Ausgangsstroms des Drosselwandlers und mit einer Einrichtung (R1) zur Erfassung der Eingangsspannung des Drosselwandlers, wobei die Steuereinrichtung den steuerbaren Schalter (LS) derart ansteuert, daß sich der Ausgangsstrom in Abhängigkeit von der Ausgangsspannung und der Eingangsspannung ändert.

2. Drosselwandler nach Anspruch 1,
**dadurch gekennzeichnet,**
daß er eine Anordnung zur Abschaltung des Drosselwandlers bei geringer Eingangsspannung aufweist.

3. Drosselwandler nach Anspruch 1 oder 2,
**dadurch gekennzeichnet,**
daß bei geringer Eingangsspannung der Ausgangswiderstand des Drosselwandlers praktisch unendlich groß ist.

4. Drosselwandler nach Anspruch 1, 2 oder 3,
**dadurch gekennzeichnet,**
daß die Steuereinrichtung einen ersten Komparator (K1) mit Hysterese und eine erste Referenzspannungsquelle (U1) aufweist.

5. Drosselwandler nach Anspruch 4,
**dadurch gekennzeichnet,**
daß die von der ersten Referenzspannungsquelle (U1) gelieferte Referenzspannung (Uref1) zwei verschiedene Werte annimmt, je nach dem ob der Ausgang des ersten Komparators (K1) "low" oder "high" ist.

6. Drosselwandler nach Anspruch 4 oder 5,
**dadurch gekennzeichnet,**
daß er selbstschwingend ist.

7. Drosselwandler nach Anspruch 6,
**dadurch gekennzeichnet,**
daß er einen Steuereingang (Stop) aufweist, über den er abgeschaltet werden kann.

8. Drosselwandler nach einem der vorhergehenden Ansprüche,
**dadurch gekennzeichnet,**
daß der Ausgangsstrom des Drosselwandlers sowohl in einer Leitphase als auch einer Sperrphase des steuerbaren Schalters (LS) erfaßbar ist.
